# EUROPÄISCHE PATENTSCHRIFT

(11) **EP 2 060 184 B1**
(45) Veröffentlichungstag und Bekanntmachung des Hinweises auf die Patenterteilung: **31.08.2016**
(21) Anmeldenummer: 08168836.8
(22) Anmeldetag: 11.11.2008
(51) Int. Cl.: A21B 3/04, F24C 15/32, A47J 27/04, A47J 27/16

(54) **Verfahren zum Garen von Kochgut und Kochgerät hierfür**
Method for heating food and cooker for same
Procédé de cuisson d'aliments et appareil de cuisson correspondant

(30) Priorität: 16.11.2007 CH 17752007
(43) Veröffentlichungstag der Anmeldung: 20.05.2009
(73) Patentinhaber: Elro (Holding ) AG, 5620 Bremgarten (CH)
(72) Erfinder: Gatter, Raimond, 8730, Uznach (CH)
(74) Vertreter: Liebetanz, Michael

(56) Entgegenhaltungen:
- EP-A- 1 729 065
- WO-A-01/80649
- DE-A1- 3 026 312
- DE-C- 887 002
- DE-C- 939 528
- FR-A- 2 638 376
- GB-A- 1 379 370
- GB-A- 191 307 612
- JP-A- 2003 250 505
- JP-A- 2003 312 751
- JP-A- 2006 102 066
- JP-A- 2006 105 523
- JP-A- 2006 166 797
- US-A- 6 125 738
- US-A1- 2003 213 792

## Beschreibung

Die Erfindung betrifft ein Verfahren zum Garen von Kochgut mit einem Kochgerät mit einem Garraum und einem mit diesem Garraum über eine Leitung verbundenen Dampferzeugungsraum und die Erfindung betrifft ein Kochgerät hierfür.

Die EP 0 582 238 beschreibt ein solches Kochgerät mit einem Garraum und einem Dampferzeugungsraum, zwischen denen eine Trennwand vorgesehen ist.

Der Anwender wünscht in der Regel, dass Kochgeräte in der Grossküche eine entsprechende Heizleistung haben, damit die erforderlichen Kochprozesse rasch ablaufen. Es soll möglich sein, in rascher Abfolge kaltes Gut schnell aufzuheizen und damit gar zu kochen. Der Stand der Technik setzt zwar das Dampfgaren um, ist aber beim raschen Chargenwechsel überfordert.

Der Dampf kommt entweder aus einem separaten Speicher als überhitzter Trockendampf oder aus dem Heizregister des Kochapparates selber, so dass mit dem Abzug von Dampf ein Leistungsabfall vorliegt.

Die DE 30 26 312 zeigt einen Druckkochapparat mit einer Dampfquelle zur Erzeugung von Dampf im Kochapparat.

Die EP 1 729 065 zeigt ebenfalls einen Druckkochapparat mit einem Dampferzeuger Bereitstellung von Dampf, welcher zur Erhitzung von Lebensmittel dient.

Ausgehend von diesem Stand der Technik liegt der Erfindung die Aufgabe zugrunde, ein Kochgerät der eingangs genannten Art auszugestalten, damit die Kochprozesse schneller ablaufen, wobei sie genauso schonend ausgestaltet sein sollen.

Diese Aufgabe wird erfindungsgemäss für ein Verfahren der eingangs genannten Art mit den kennzeichnenden Merkmalen des Anspruchs 1 gelöst. Diese Aufgabe wird erfindungsgemäss für ein Kochgerät der eingangs genannten Art mit den kennzeichnenden Merkmalen des Anspruchs 6 gelöst.

Damit ist es möglich, die Aufheizzeit von Gargut in einem Kochgerät durch direkt in den Garraum eingeschossenen Dampf zu verkürzen und eine Dämpf- und Regenerierfunktion zu erreichen, ohne dass das Kochgerät selbst aufgeheizt werden muss.

Der Dampf des separaten Dampferzeugers kann unabhängig von der Beheizung des Kessels in den Garraum eingeleitet werden. Dadurch lassen sich Speisen schnell und schonend regenerieren, blanchieren und auch kleinere Mengen wirtschaftlich dämpfen, ohne dass das Kochgerät selbst und das Heizregister zusätzlich aufgeheizt werden müssen. Durch die hohe Anschlussleistung und das geringe Volumen des Dampferzeugers wird innerhalb kürzester Zeit (2-3min) die Betriebsbereitschaft erreicht.

Weitere vorteilhafte Ausführungsbeispiele sind in den Unteransprüchen niedergelegt.

Die Erfindung wird nun unter Bezugnahme auf die Zeichnungen beispielhaft näher beschrieben. Es zeigen:
- Fig. 1: eine perspektivische Ansicht eines Einsatzes für einen Garraum eines Kochgeräts gemäss einem Ausführungsbeispiel der Erfindung,
- Fig. 2: eine seitliche Darstellung des Einsatzes nach Fig. 1,
- Fig. 3: eine schematische Darstellung des Dampfzuführungsverteilers im Einsatz nach Fig. 1,
- Fig. 4: eine schematische seitlich aufgeschnittene Ansicht eines Kochgeräts mit Einsatz und Darstellung des Dampfweges nach einem anderen Ausführungsbeispiel der Erfindung, und
- Fig. 5: eine schematische Draufsicht auf das Gerät nach Fig. 4.

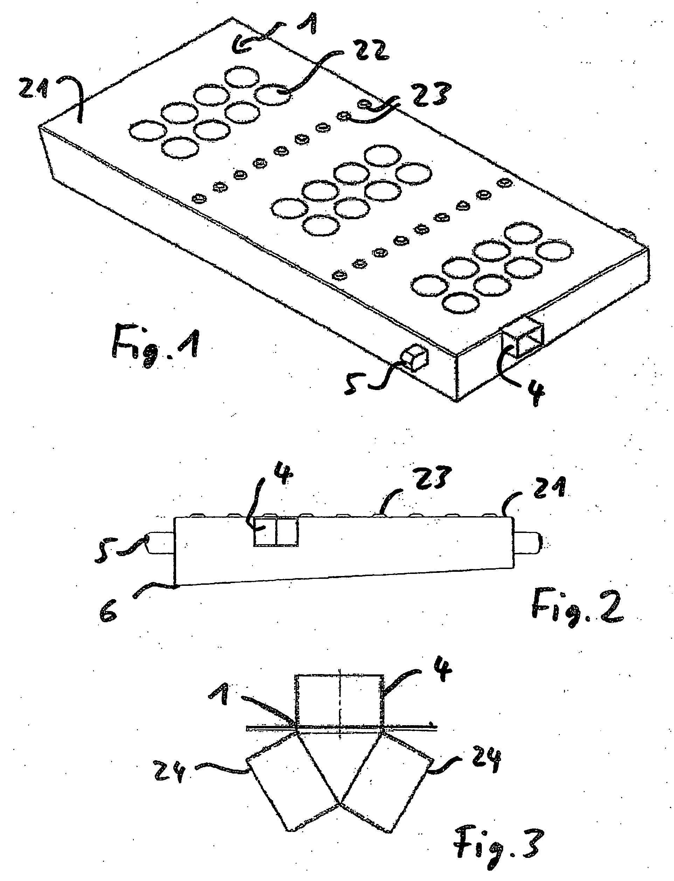

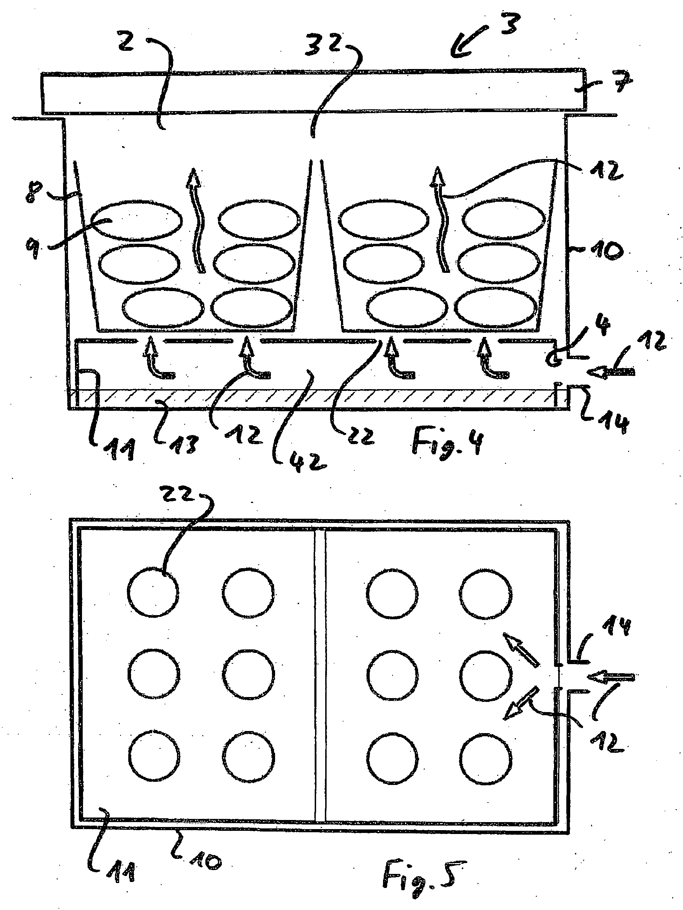

Die Fig. 1 zeigt eine perspektivische Ansicht eines Einsatzes 1 für einen Garraum 2 eines Kochgeräts 3 gemäss einem Ausführungsbeispiel der Erfindung. Das Kochgerät 3 mit Garraum 2 ist schematisch an einem anderen Ausführungsbeispiel in der Fig. 4 dargestellt, wobei dort ein anderer Einsatz 11 eingesetzt ist. Der Einsatz 1 kann auch als Bodenblech bezeichnet werden. Er verfügt über eine obere Deckfläche 21, die hier drei Gruppen von 2 mal 4 Löchern 22 aufweist. Die drei Gruppen von Löchern, auch Durchtrittselemente genannt, unterteilen die obere Deckfläche 21 in drei Stellflächen, wobei vorteilhafterweise Elemente die Stellflächen voneinander abgrenzen. Hier sind dies eine Reihe von entlang einer quer verlaufenden Linie angeordnete Noppen 23.

Natürlich können diese Löcher in anderer Zahl oder Anordnung vorgesehen sein, auch müssen sie nicht rund sein. Die zwischen den Löchern bestehenden Stege dienen als Stütze für einen auf die Stellfläche abzustellenden Gargutbehälter 8; solche Behälter sind beispielsweise Gitterkörbe. Vorteilhaft ist es aber, die Löcher auf den Stellflächen zentriert anzuordnen, so dass um diese Löchergruppen herum eine geschlossene Fläche übrigbleibt, beispielweise und vorteilhafterweise im Bereich von jeweils 2 - 4 Zentimeter.

An einer Seite des Einsatzes 1, hier der Stirnseite, ist ein Dampf zuführungsverteiler 4 vorgegehen. Dieser bildet Leitelemente aus, die den Dampf verteilen. Der Dampfzuführungsverteiler 4 ist nahe der Oberseite des Einsatzes 1 angeordnet, so dass Dampf knapp über oder knapp in der Wasservorlage 13 eingeleitet wird. Dadurch besteht ein geringerer Druck unter dem Einsatz 1, 11 und dieser kann leichter gegenüber dem oberen Garraumvolumen abgedichtet werden. Ein weiterer Vorteil liegt darin, dass die Energieverteilung nicht von Höhe der Wasservorlage 13 abhängig ist. Sie kann auch weggelassen werden oder sich ernst während des Garvorganges durch Kondensation bilden.

Neben dem Dampfzuführungsverteiler 4 ist es auch möglich, (in den Zeichnungen nicht dargestellte) weitere Leitelemente zur Dampfverteilung im Bereich unterhalb der Deckfläche 21 vorzusehen, insbesondere quer zum Dampfstrom angeordnete vertikal oder geneigt ausgerichtete Stege.

Seitliche Gleitstücke 5 dienen der Positionierung des Einsatzes 1 im Garraum 2. Die Fig. 2 ist eine seitliche Darstellung des Einsatzes 1 nach Fig. 1; dabei ist zu erkennen, dass die seitliche Unterkante 6 des Einsatzes 1 in Querrichtung schräg verläuft. Diese Unterkanten 6 sind rundherum so ausgestaltet, dass diese Unterkanten 6 des Einsatzes 1 entweder auf dem Boden des Garraums 2 aufstehen oder durch Elemente wie die Gleitstücke 5 in einem sehr kleinen Abstand über dem Boden des Garraums 2 gehalten werden.

Die Fig. 3 zeigt eine schematische Darstellung des Dampfzuführungsverteilers 4 im Einsatz 1 nach Fig. 1. Dieser kann im Querschnitt rechteckig ausgestaltet sein, oder auch rund, angepasst an die Dampfzuführung 14 des Kochgeräts 3 in der Seitenwand des Garraums 2. Der Dampfzuführungsverteiler 4 ist nun als insgesamt dreiarmiger Verteiler gebaut, der den quer einströmenden Dampf in zwei Ströme aufteilt und verwirbelt. Der Winkel der Arme 24 gegenüber der Achse des einströmenden Dampfes kann beispielsweise 60 Grad gewählt sein. Ziel der Aufteilung ist die bessere Dampfverteilung gerade unter der ersten, dem Verteiler 4 nahen Stellfläche.

Die Fig. 4 zeigt eine schematische seitlich aufgeschnittene Ansicht eines Kochgeräts 3 mit Einsatz 11 und Darstellung des Dampfweges 12. Das Kochgerät 3 verfügt über einen von der Wand 10 begrenzten Garraum 2, welcher durch einen Deckel 7 abgeschlossen wird. Im Bereich von diesem ist in bekannter Weise ein Dampfablass und/oder ein Überdruckventil vorgesehen. Die dazugehörige Fig. 5 zeigt eine schematische Draufsicht auf das Gerät nach Fig. 4, wobei ersichtlich ist, dass hier nur zwei Gruppen von Löchern 22 für zwei Gargutbehälter 8 vorgesehen sind.

Auf dem Boden des Kochgeräts 3 steht der Einsatz 11 auf. Damit unterteilt sich der Garraum 2 in ein Kochgutvolumen 32 und ein Einleitungsvolumen 42. Der Einsatz 11 steht in einer Wasservorlage 13. Die Wasservorlage 13 dichtet dabei unter anderem den Einsatz 11 gegen den umgebenden Boden ab, so dass Dampf im wesentlichen nur durch die Löcher 22 aus dem Einleitungsvolumen 42 in das Kochgutvolumen 32 entweichen kann und nicht an der Unterseite 6 des Einsatzes 11. Die Zuführung besteht aus dem Dampfzuführungsverteiler 4 des Einsatzes und einer Dampfzuführung 14 des Kochgeräts, die beispielsweise aus einem Dampf speicher indirekt oder einem Dampferzeuger direkt gespeist wird. Der Zustrom an Dampf beziehungsweise Wasser wird über jeweils ein zwischengeschaltetes Ventil geregelt.

Der Dampf 12 durchströmt den Garbehälter 8 von unten nach oben, das heisst von den Löchern 22 des Einsatzes 1, 11 in Richtung Deckel 7. Aufgrund der regelmässigen Anordnung der Löcher 22 kann der Dampf über die gesamte Oberfläche des Einsatzes 1, welche dem Garraum 2 zugewandt ist, in den Garraum 2 bzw. in die Garbehälter 8 einströmen. Diese Art der Einströmung in den Garraum 2 bzw. der Durchströmung durch den Garbehälter 8 ist besonders vorteilhaft, da Luft, welche sich zu Beginn eines Garvorganges im Garbehälter 8 befindet, effizient verdrängt werden kann, und so eine gute und konstante Verteilung des Dampfes im Garbehälter 8 gewährleistet werden kann. Aufgrund der gleichmässigen Verteilung des Dampfes kann das Gargut gleichmässig erhitzt werden, was sich auf die Garqualität des Gärgutes positiv auswirkt. Ferner kann die Garzeit so verkürzt worden.

Mit anderen Worten kann auch gesagt werden, dass der Dampf aufgrund der Löcher 22 und aufgrund der Abdichtung zwischen Einsatz 11 und Boden des Garraumes 2 durch die Wasservorlage zwangsweise in die Garbehälter 8 geführt wird.

Der Garraum 2 des Kochgeräts 1 ist druckfest, beispielsweise bis 10 bar.

Die prinzipielle Wirkungsweise des Kochgeräts 3 ist wie folgt. Es wird vorzugsweise eine Wasservorlage 13 in dem Garraum 2 aufgebaut. Dampf wird von einem separat beheizten, externen angeordneten Dampferzeuger erzeugt und wie unten beschrieben in den Garraum 2 des Kochgeräts eingeschossen. Der Dampferzeuger hat eine separate Beheizung in Grössenordnung der Kesselheizung. In der Aufheizphase steht somit eine maximale Leistung zur Verfügung.

Es wird dabei Dampf 11 (trocken gesättigter Dampf) mit nur wenig überhöhtem Druck erzeugt. Der Druck des Dampfspeichers kann dabei beispielsweise 0,5-3 bar betragen. Vorteilhafterweise liegt der Druck im Vorraum 2 dann zwischen 0,5 und 3 bar, vorzugsweise zwischen 1 bar und 2 bar. Der Dampf ist dabei im Bereich Sattdampf oder im Trockendampfbereich bis maximal 20 Kelvin über der Sattdampfkurve ausgelegt. Oberflächenschäden durch Trockendampf am Gargut werden dadurch vermieden und der Dampf befindet sich in dem für eine Abgabe der Wärmeenergie an das Kochgut günstigen Kondensationsbereich. Ein weiterer Vorteil dieser Auslegung liegt dadurch darin, dass der Dampf auch nicht zum Abkühlen durch eine/die Wasservorlage 13 geleitet werden muss. Die im Dampf transportierte Energie steht somit fast ohne Verluste unmittelbar für das Aufheizen des Garguts 9 zur Verfügung.

Der Dampfeintritt befindet sich im Kochgerät 3 unten, nahe dem Boden, gerade unterhalb der Fläche 21 des Einsatzes 11. Der Dampf wird gemäss den durch die Pfeile 12 angedeuteten Wegen von unten nach oben durch das Gargut geführt 9 und unterstützt so auch die initiale Entlüftung des Garraums 2. Vorteilhafterweise umfasst der Eintritt ein plan in die Wand 10 integriertes selbstschliessendes Rückschlagventil.

Der Benutzer füllt Kochgut oder Gargut 9 in Gargutbehälter 8 und stellt diese in den Garraum 2 auf die Stellflächen. Dann wird eine Aufheizphase gestartet, in der der gesättigte Dampf 12 über die Zuleitung 14 in das Einleitungsvolumen 42 des Garraums 2 geführt wird. Dann tritt der Dampf durch die Löcher 22 entsprechend den Pfeilen 12 in das Kochgutvolumen 32 ein und streift an dem Gargut 9 vorbei, welches durch die entsprechend angeordneten Gargutbehälter 8 direkt von dem Dampf 12 beaufschlagt wird. Dabei tritt ein Wärmeübertrag ein und das Gargut 9 wird erwärmt. Da die Temperatur des Dampfes auf Grund des nur leicht erhöhten Druckes nicht sehr viel grösser als 100 Grad Celsius ist, kann kein Verbrennen des Garguts 9 eintreten. Der Dampf kondensiert auf dem kalten Kochgut und heizt damit dieses ganz schonend und sehr schnell auf.

Dabei kann die Qualität des Kochprozesses dadurch gesteigert werden, indem mit der Luft der Sauerstoff im Garraum 2 entfernt wird. Das kann leicht erreicht werden, indem im Garraum 2 ein Multifunktionsventil eingesetzt ist, welches neben der Sicherheitsfunktion (gegenüber Überdruck) und dem schnellen Ablassen des Kochüberdrucks vor allem ein Durchflussventil und Vakuumbrecher enthält. Beim Beginn des Aufheizens entweicht vor allem Luft aus dem Garraum 2. Sobald ein Grossteil der Luft durch Dampf ersetzt ist, steigt die Durchflussmenge des entweichenden Gases stark an. Diese Menge wird gemessen und das Ventil geschlossen. Das geschieht zu einem Zeitpunkt, wenn sich die ursprünglich vorhandene Luftmenge sehr reduziert hat und im wesentlichen Dampf im Garraum 2 vorhanden ist.

Durch Verteilung des Dampfes und dessen Kondensation wird das Gargut erwärmt und der Druck im Garraum 2 nimmt ab. Wenn die Energie vom Kochgut aufgenommen wird, wird in mehreren Schritten über kürzere Zeitdauern erneut Dampf in den Garraum 2 geführt. Vorteilhafterweise wird der Durchfluss entsprechend gedrosselt. Dann können bei jedem Dampfeinlass geringere Steigungen des Druckes über die Zeit erreicht werden, so dass das schwingende System stabiler wird. Nach einigen Dampfzuführungszyklen ist das Gas im Garraum vollständig auf die entsprechende Zwischentemperatur, grösser als die Siedetemperatur gebracht. Insgesamt geht durch die Entlüftungsvorrichtung nur wenig Dampf verloren. Hierfür kann die Steuerung des Kochgeräts aus dem Temperaturverlauf-/Zeitverhalten des Garraums 2 den von der Menge und Art des Garguts 9 abhängigen Leistungsbedarf ermitteln und entsprechend die Dampfzufuhr steuern. Dies kann sowohl über ein Proportionalventil, als auch über Takten eines Magnetventils erfolgen. Vorteilhafterweise ist eine solche Entlüftungsvorrichtung an oder im Bereich des Deckels 7 des Kochgeräts 3, vorteilhafterweise diametral gegenüber der Dampfzuführung 14 angeordnet.

Optional kann der Dampferzeuger mehrere Abgänge haben und so sukzessive mehrere Kochgeräte mit Dampf versorgen. Die Anpassung an die verschiedenen Leistungsstufen erfolgt einfach über Drosselblenden.

Besonders vorteilhaft ist die Beheizung des Garraums 2 durch ein konventionelles Heizregister unabhängig von dem Dampferzeuger. Dabei kann die Anschlussleistung des Dampferzeugers im Bereich der Anschlussleistung des Kochgerätes selber liegen und somit die Anheizleistung verdoppelt werden. Ein grosser Praxisvorteil entsteht durch die hierdurch erreichte Verkürzung der Ankochzeit um 50% - 70%. Volumina des Dampferzeugers von weniger als 25 Liter gestatten eine kompakte Bauweise.

### Bezugszeichenliste:

- 1: Einsatz
- 2: Garraum
- 3: Kochgerät
- 4: Dampfzuführungsverteiler
- 5: Gleitstücke
- 6: Unterkante
- 7: Deckel
- 8: Garbehälter
- 9: Gargut
- 10: Wand
- 11: Einsatz
- 12: Dampfweg
- 13: Wasservorlage
- 21: Deckfläche
- 22: Löcher
- 23: Noppen
- 24: Arme
- 32: Kochgutvolumen
- 42: Einleitungsvolumen

## Patentansprüche

1. Verfahren zum Garen von Kochgut mit einem Kochgerät (3), mit einem Garraum (2), einer Kesselheizung, und einem mit diesem Garraum (2) über eine Leitung verbundenen Dampferzeuger mit Dampferzeugungsraum, wobei der Dampferzeuger extern zum Kochgerät ist, wobei der Dampferzeuger eine separate Beheizung in Grössenordnung der Kesselheizung aufweist, mit den Verfahrenschritten:
a) des Unterteilens des Garraums (2) durch einen Einsatz (1,11) in ein Einleitungsvolumen (42) und ein Kochgutvolumen (32), wobei der Einsatz (1,11) für den Übergang zwischen Einleitungsvolumen (42) und Kochgutvolumen (32) über Gruppen angeordnete Durchtrittselemente (22) verfügt, mit denen ein übertretende Gas an Kochgut vorbeiführbar wird,
b) des Erzeugens eines trocken gesättigten Dampfes oder Sattdampfes, insbesondere bis maximal 20 Kelvin über der Sattdampfkurve, in dem zum Garraum (2) externen Dampferzeugungsraum, unabhängig von der Beheizung des Garraums,
c) des Bereitstellens einer Wasservorlage (13) in dem Garraum (2), mit der die über die Durchtrittselemente (22) hinaus bestehenden Übergänge des Einsatzes (1, 11) zwischen Einleitungsvolumen (42) und Kochgutvolumen (32) abgedichtet werden,
d) des Öffnens eines Verbindungsventils zwischen dem externen Dampferzeugungsraum und Garraum (2, 32, 42), so dass der besagte Dampf in das Einleitungsvolumen (42) eingeleitet wird und durch die Durchtrittselemente (22) am Kochgut vorbeigeführt in das Kochgutvolumen (32) austritt.

2. Verfahren nach Anspruch 1, **dadurch gekennzeichnet, dass** der Einsatz (1, 11) Leitelemente (4) aufweist, mit denen Dampf in dem Einleitungsvolumen (42) gleichmässig verteilt wird.

3. Verfahren nach Anspruch 1 oder 2, **dadurch gekennzeichnet, dass**, intermittierend oder vorzugsweise kontinuierlich eine Dampfmenge in den Garraum (2) eingebracht wird, um einen vorbestimmten Aufheizdruck zu erreichen und zu halten.

4. Verfahren nach Anspruch 3, **dadurch gekennzeichnet, dass** an eine kontinuierliche Einbringung von Dampf in den Garraum (2) in mehreren aufeinanderfolgenden Schritten Zeitabschnitten ohne Dampfeinbringung Zeitabschnitten mit Dampfeinbringung folgen, um in dem Garraum (2) befindliche, ursprünglich kälteres Kochgut (9) auf die dem Aufheizdruck entsprechende Temperatur aufzuheizen.

5. Verfahren nach einem der vorhergehenden Ansprüche, **dadurch gekennzeichnet, dass** der Dampf (12) den Garraum (2), insbesondere das Kochgutvolumen (32), von der Oberfläche des Einsatz (1, 11), die zum Kochgutvolumen (32) zugewandt ist, von unten nach oben im wesentlichen senkrecht zur genannten Oberfläche durchströmt.

6. Kochgerät (3) zur Durchführung des Verfahrens nach einem der Ansprüche 1 bis 5 mit einem Garraum (2), einer Kesselheizung, einem Dampferzeuger mit Dampferzeugungsraum, wobei der Dampferzeugungsraum mit dem Garraum (2) über eine in ihm mündende Dampfzuführung (14) verbunden ist, **dadurch gekennzeichnet, dass** die Mündung der Dampfzuführung (14) in ein Einleitungsvolumen (42) führt, das von dem Kochgutraum (32) des Garraumes (2) durch einen Einsatz (1, 11) trennbar ist, wobei der Einsatz (1, 11) über Durchtrittselemente (22) verfügt, durch welche Dampf von dem Einleitungsvolumen (42) das Kochgutvolumen (32) überleitbar ist, wobei der Garraum (2) von dem Dampferzeugungsraum durch ein Ventil getrennt ist, und wobei in dem Dampferzeugungsraum ein trocken gesättigter Dampf oder Sattdampf, insbesondere bis maximal 20 Kelvin über der Sattdampfkurve, erzeugbar ist, der nach Öffnen des Ventils durch Hindurchleiten durch das Einleitungsvolumen (42) verteilt in das Kochgutvolumen (32) bringbar ist, wobei der Einsatz (11) in einer Wasservorlage (13) steht, welche den Einsatz (11) im Wesentlichen gegen den umgebenden Boden des Garraumes (2) abdichtet, so dass der Dampf zwangsweise durch die Durchtrittselemente (22) in die Garbehälter (8) führbar ist, wobei der Einsatz (1, 11) ein nach unten offenes und über Gruppen von Löchern als Durchtrittselemente (22) verfügendes Blech ist, und wobei der Dampferzeuger extern vom Kochgerät ist, so dass der Dampf von extern in den Garraum einleitbar ist und wobei der Dampferzeuger eine separate Beheizung in Grössenordnung der Kesselheizung hat.

7. Kochgerät nach Anspruch 6, **dadurch gekennzeichnet, dass** der Einsatz (1, 11) über Leitelemente (4) zur Verteilung von Dampf in dem durch ihn begrenzten Einleitungsvolumen (42) verfügt.

8. Kochgerät nach einem der Ansprüche 6 oder 7, **dadurch gekennzeichnet, dass** der Einsatz (1, 11) über Stellflächen für Gargutbehälter (8) verfügt und dass die Durchtrittselemente (22) des Einsatzes (1, 11) in Gruppen angeordnet sind, die eine Durchtrittsfläche abdecken, die kleiner als die Bodenfläche der auf dem Einsatz stellbaren Gargutbehälter (8) ist.

9. Kochgerät nach einem der Ansprüche 6 bis 7, **dadurch gekennzeichnet, dass** die Durchtrittselemente (22) des Einsatzes (1, 11) nahe am Boden des Kochgerätes angeordnet sind und/oder dass eine Entlüftungsvorrichtung an oder im Bereich des Deckels (7) des Kochgeräts (3), vorteilhafterweise diametral gegenüber der Dampfzuführung (14) angeordnet ist.

## Claims

1. Method for cooking food using a cooking device (3) comprising a cooking chamber (2), a tank heater, and a steam generator which is connected to this cooking chamber (2) via a line and has a steam generating chamber, wherein the steam generator is external to the cooking device, wherein the steam generator is heated separately in the order of magnitude of the tank heater, the said method comprising the method steps of:
a) subdividing the cooking chamber (2) by virtue of an insert (1, 11) into an introduction volume (42) and a food volume (32), wherein the insert (1, 11), for the transition between the introduction volume (42) and the food volume (32), has passage elements (22) which are arranged in groups and by way of which a passing gas is guided past food,
b) generating a dry saturated steam, in particular up to a maximum of 20 Kelvins above the saturated steam curve, in the steam generating chamber which is external to the cooking chamber (2), independently of the heating of the cooking chamber,
c) providing a water trap (13) in the cooking chamber (2), by way of which water trap the transitions of the insert (1, 11) between the introduction volume (42) and the food volume (32), which transitions exist beyond the passage elements (22), are sealed off,
d) opening a connection valve between the external steam generating chamber and the cooking chamber (2, 32, 42), so that the said steam is introduced into the introduction volume (42) and exits into the food volume (32) in a manner guided past the food through the passage elements (22).

2. Method according to Claim 1, **characterized in that** the insert (1, 11) has guiding elements (4) with which steam is uniformly distributed in the introduction volume (42).

3. Method according to Claim 1 or 2, **characterized in that** a quantity of steam is introduced into the cooking chamber (2) intermittently or preferably continuously in order to reach and to maintain a predetermined heating pressure.

4. Method according to Claim 3, **characterized in that** by a continuous introduction of steam into the cooking chamber (2) in several successive steps time periods without the introduction of steam follow time periods with the introduction of steam in order to heat up originally cold food (9) which is located in the cooking chamber (2) to the temperature which corresponds to the heating pressure.

5. Method according to one of the preceding claims, **characterized in that** the steam (12) flows through the cooking chamber (2), in particular the food volume (32), from the surface of the insert (1, 11), which surface faces the food volume (32), from the bottom upwards substantially perpendicular to the said surface.

6. Cooking device (3) for carrying out the method according to one of Claims 1 to 5, comprising a cooking chamber (2), a tank heater, a steam generator with a steam generating chamber, wherein the steam generating chamber is connected to the cooking chamber (2) by means of a steam supply (14) which issues into the said cooking chamber, **characterized in that** the mouth of the steam supply (14) leads into an introduction volume (42) which can be separated from the food chamber (32) of the cooking chamber (2) by an insert (1, 11), wherein the insert (1, 11) has passage elements (22) through which steam can be conducted from the introduction volume (42) the food volume (32), wherein the cooking chamber (2) is separated from the steam generating chamber by a valve, and wherein a dry saturated steam, in particular up to a maximum of 20 Kelvins above the saturated steam curve, can be generated in the steam generating chamber, it being possible for the said saturated steam to be introduced into the food volume (32) in a distributed manner by being conducted through the introduction volume (42) after the valve is opened, wherein the insert (11) is situated in a water trap (13) which substantially seals off the insert (11) from the surrounding base of the cooking chamber (2), so that the steam can be forcibly guided through the passage elements (22) into the cooking container (8), wherein the insert (1, 11) is a metal sheet which is open at the bottom and has groups of holes as passage elements (22), and wherein the steam generator is external to the cooking device, so that the steam can be introduced into the cooking chamber from the outside, and wherein the steam generator is heated separately in the order of magnitude of the tank heater.

7. Cooking device according to Claim 6, **characterized in that** the insert (1, 11) has guiding elements (4) for distributing steam in the introduction volume (42) which is delimited by the said insert.

8. Cooking device according to either of Claims 6 and 7, **characterized in that** the insert (1, 11) has placement areas for food containers (8), and **in that** the passage elements (22) of the insert (1, 11) are arranged in groups which cover a passage area which is smaller than the base area of the food containers (8) which can be placed on the insert.

9. Cooking device according to either of Claims 6 and 7, **characterized in that** the passage elements (22) of the insert (1, 11) are arranged close to the base of the cooking device, and/or **in that** a ventilation apparatus is arranged on or in the region of the cover (7) of the cooking device (3), advantageously diametrically opposite the steam supply (14).

## Revendications

1. Procédé de cuisson d'aliments avec un appareil de cuisson (3), avec une chambre de cuisson (2), un chauffage de cuve et un générateur de vapeur avec chambre de génération de vapeur relié à cette chambre de cuisson (2) via une conduite, le générateur de vapeur étant à l'extérieur de l'appareil de cuisson, le générateur de vapeur comportant un chauffage séparé de l'ordre de grandeur du chauffage de cuve, avec les étapes de procédé suivantes :
a) subdivision de la chambre de cuisson (2) par le biais d'un insert (1, 11) en un volume de déversement (42) et un volume d'aliments (32), l'insert (1, 11) disposant, pour la transition entre le volume de déversement (42) et le volume d'aliments (32), d'éléments traversants (22) disposés en groupes, un gaz entrant pouvant être guidé en avant vers les aliments à l'aide desdits éléments ;
b) production d'une vapeur saturée sèche ou vapeur saturée, notamment jusqu'à maximum 20 Kelvin au-dessus de la courbe de vapeur saturée dans la chambre de génération de vapeur externe à la chambre de cuisson (2), indépendamment du chauffage de la chambre de cuisson ;
c) mise à disposition d'un réservoir d'eau (13) dans la chambre de cuisson (2) avec lequel les transitions, sortant au-delà des éléments traversants (22), de l'insert (1, 11) sont étanchéifiées entre le volume de déversement (42) et le volume d'aliments (32) ;
d) ouverture d'une soupape de jonction entre la chambre de génération de vapeur externe et la chambre de cuisson (2, 32, 42), de sorte que ladite vapeur soit introduite dans le volume de déversement (42) et soit guidée en avant à travers les éléments traversants (22) au niveau des aliments dans le volume d'aliments (32).

2. Procédé selon la revendication 1, **caractérisé en ce que** l'insert (1, 11) comporte des éléments conducteurs (4) à l'aide desquels la vapeur puisse être uniformément répartie dans le volume de déversement (42).

3. Procédé selon la revendication 1 ou 2, **caractérisé en ce que**, de façon intermittente ou de préférence en continu, une quantité de vapeur est amenée dans la chambre de cuisson (2), pour atteindre et maintenir une pression d'échauffement prédéfinie.

4. Procédé selon la revendication 3, **caractérisé en ce qu'**à un apport continu de vapeur dans la chambre de cuisson (2) en plusieurs étapes successives, des sections de temps sans application de vapeur succèdent à des sections de temps avec application de vapeur pour chauffer à la température correspondant à la pression d'échauffement des aliments (9) froids à l'origine se trouvant dans la chambre de cuisson (2).

5. Procédé selon l'une quelconque des revendications précédentes, **caractérisé en ce que** la vapeur (12) traverse la chambre de cuisson (2), notamment le volume d'aliments (32), en partant de la surface de l'insert (1, 11) orienté vers le volume d'aliments (32), d'en bas vers le haut, pour l'essentiel perpendiculairement à ladite surface.

6. Appareil de cuisson (3) permettant de mettre en oeuvre le procédé selon l'une quelconque des revendications 1 à 5 avec une chambre de cuisson (2), un chauffage de cuve, un générateur de vapeur avec chambre de génération de vapeur, la chambre de génération de vapeur avec la chambre de cuisson (2) étant reliée via une amenée de vapeur (14) débouchant dans ladite chambre, **caractérisé en ce que** l'embouchure de l'amenée de vapeur (14) conduit dans un volume de déversement (42) pouvant être séparé de la chambre d'aliments (32) de la chambre de cuisson (2) par un insert (1, 11), l'insert (1, 11) disposant d'éléments traversants (22) à travers lesquels la vapeur peut être amenée du volume de déversement (42) volume d'aliments (32), la chambre de cuisson (2) étant séparée de la chambre de génération de vapeur par une soupape et une vapeur saturée sèche ou vapeur saturée pouvant être produite dans la chambre de génération de vapeur, notamment jusqu'à maximum 20 Kelvin au-dessus de la courbe de vapeur saturée, cette vapeur pouvant être amenée de façon à être répartie dans le volume d'aliments (32) après l'ouverture de la soupape par introduction à travers le volume de déversement (42), l'insert (11) se tenant dans un réservoir d'eau (13) étanchéifiant l'insert (11) pour l'essentiel contre le fond alentour de la chambre de cuisson (2), de sorte que la vapeur peut être guidée d'office, à travers les éléments traversants (22), jusque dans le récipient de cuisson (8), l'insert (1, 11) étant une tôle ouverte vers le bas et disposant de groupes de trous servant d'éléments traversants (22) et le générateur de vapeur étant à l'extérieur de l'appareil de cuisson, de sorte que la vapeur peut être introduite de l'extérieur dans la chambre de cuisson et le générateur de vapeur ayant un chauffage séparé de l'ordre de grandeur du chauffage de cuve.

7. Appareil de cuisson selon la revendication 6, **caractérisé en ce que** l'insert (1, 11) dispose d'éléments conducteurs (4) pour la répartition de la vapeur dans le volume de déversement (42) délimité par lui.

8. Appareil de cuisson selon l'une quelconque des revendications 6 ou 7, **caractérisé en ce que** l'insert (1, 11) dispose de surfaces de réglage pour le récipient d'aliments à cuire (8) et que les éléments traversants (22) de l'insert (1, 11) sont disposés en groupes recouvrant une surface traversante inférieure à la surface de fond du récipient d'aliments à cuire (8) pouvant être placé sur l'insert.

9. Appareil de cuisson selon l'une quelconque des revendications 6 à 7, **caractérisé en ce que** les éléments traversants (22) de l'insert (1, 11) sont disposés à proximité du fond de l'appareil de cuisson et/ou qu'un dispositif d'évacuation est disposé au niveau de la zone du couvercle (7) de l'appareil de cuisson (3) ou dans celle-ci, de façon avantageuse de façon diamétralement opposée à l'amenée de vapeur (14).
